(19) Europäisches Patentamt
European Patent Office
Office européen des brevets

(11) EP 0 649 276 B1

(12) # EUROPÄISCHE PATENTSCHRIFT

(45) Veröffentlichungstag und Bekanntmachung des Hinweises auf die Patenterteilung: **21.10.1998 Patentblatt 1998/43**

(21) Anmeldenummer: **93915797.0**

(22) Anmeldetag: **05.07.1993**

(51) Int. Cl.$^6$: **A01N 43/82**
// (A01N43/82, 43:707)

(86) Internationale Anmeldenummer:
**PCT/EP93/01732**

(87) Internationale Veröffentlichungsnummer:
**WO 94/02014 (03.02.1994 Gazette 1994/04)**

(54) **HERBIZIDE MITTEL AUF BASIS EINES HETEROARYLOXYACETAMIDS**
HERBICIDAL AGENTS BASED ON A HETEROCYCLIC ARYLOXYACETAMIDE
AGENTS HERBICIDES A BASE D'UN HETEROARYLOXYACETAMIDE

(84) Benannte Vertragsstaaten:
**BE CH DE DK FR GB IT LI NL SE**

(30) Priorität: **16.07.1992 DE 4223465**

(43) Veröffentlichungstag der Anmeldung:
**26.04.1995 Patentblatt 1995/17**

(60) Teilanmeldung:
**97120059.7 / 0 829 202**

(73) Patentinhaber: **BAYER AG**
**51368 Leverkusen (DE)**

(72) Erfinder:
- **SANTEL, Hans-Joachim**
  **D-5090 Leverkusen (DE)**
- **FEUCHT, Dieter**
  **D-4019 Monheim (DE)**

(56) Entgegenhaltungen:
**EP-A- 0 009 616**
**EP-A- 0 108 237**
**EP-A- 0 155 493**
**EP-A- 0 195 237**
**EP-A- 0 257 771**
**EP-A- 0 290 257**
**EP-A- 0 348 737**
**EP-A- 0 427 695**
**EP-A- 0 537 543**
**EP-B- 0 067 713**
**CH-A- 559 507**
**DE-A- 2 950 682**
**DE-A- 3 238 007**
**DE-A- 3 434 982**
**DE-A- 3 600 997**
**US-A- 4 530 717**
**US-A- 4 840 663**

- **CHEMICAL PATENTS INDEX, DOCUMENTATION ABSTRACTS JOURNAL Section Ch, Week 9228, 9. September 1992 Derwent Publications Ltd., London, GB; Class C, AN 92-230512/28 & JP,A,4 154 706 (SDS BIOTECH CORP) 27. Mai 1992**
- **CHEMICAL PATENTS INDEX, DOCUMENTATION ABSTRACTS JOURNAL Section Ch, Week 8910, 3. Mai 1989 Derwent Publications Ltd., London, GB; Class C, AN 89-073384/10 & JP,A,1 026 504 (NIHON TOKUSHU NOYAKU SEI) 27. Januar 1989**
- **RESEARCH DISCLOSURE Nr. 201 , Januar 1981 , DISCLOSURE NR. 20017, HAVANT,HAMPSHIRE,GB; Seiten 9 - 17 NIHON TOKUSHU NOYAKU SEIZO K.K. 'Herbicidal agents'**
- **CHEMICAL ABSTRACTS, vol. 107, no. 9, 31. August 1987, Columbus, Ohio, US; abstract no. 72881p,**
- **CHEMICAL PATENTS INDEX, BASIC ABSTRACTS JOURNAL Section Ch, Week 8608, 16. April 1986 Derwent Publications Ltd., London, GB; Class C, AN 86-051903/08 && JP,A,61 005 004 (NIHON TOKUSHU NOYAKU SEI) 10. Januar 1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 649 276 B1

**Beschreibung**

Die Erfindung betrifft eine neue herbizide, synergistische Wirkstoffkombination, die aus einem bekannten Heteroaryloxyacetamid einerseits und einem bekannten as-Triazinon andererseits besteht und mit besonderem Vorteil zur selektiven Unkrautbekämpfung in verschiedenen Nutzpflanzenkulturen verwendet werden kann.

In den nachfolgend genannten Patentschriften werden Heteroaryloxyacetamide beschrieben, die bevorzugt gegen monokotyle Unkräuter (= Ungräser), zusätzlich aber auch gegen einige dikotyle Unkräuter wirken. Sie zeigen praktisch ausschließlich Bodenwirkung und nur geringe Wirkung über das Blatt und besitzen zum Teil eine hohe Selektivität in mono- und dikotylen Kulturpflanzen wie Getreide, Mais, Reis, Soja und Baumwolle [vergl. z.B. EP-A-5 501 (= US- A-4 509 971 und US-A-4 833 243); EP-A-18 497 (= US-A-4 645 525 und US-A-4 756 741); EP-A-29 171 (= US-A-4 408 055); EP-A-94 541 (= US-A-4 585 471); EP-A-100 044 (= US-A-4 549 899); EP-A-100 045 (= US 4 540 430): EP-A-161 602 (= US-A-4 784 682); EP-A-195 237 (= US-A-4 788 291); DE-A-3 724 467; EP-A-348 734 (= US-A-4 988 380); EP-A-348 737 (= US-A-4 968 342 und 5 090 991): DE-A-4 113 421 und DE-A-4 133 827 und EP-A-537 543; ferner WO 91/06544].

Überraschenderweise wurde nun in biologischen Versuchen gefunden, daß METRIBUZIN (aus der Gruppe der as-Triazinone) bei gemeinsamer Anwendung mit (5-Trifluormethyl-1,3,4-thiadiazol-2-yl-oxy)-essigsäure-N-isopropyl-N-(4-fluorphenyl)-amid (aus der Gruppe der Heteroaryloxyacetamide) ausgesprochen synergistische Eigenschaften hinsichtlich der Effektivität gegen Unkräuter aufweist und mit besonderem Vorteil, d.h. als breit wirksames Kombinationspräparat, zur selektiven Unkrautbekämpfung - sowohl von monokotylen wie auch von dikotylen Unkräutern, im Vorauflauf- und Nachauflaufverfahren - in monokotylen und dikotylen Nutzpflanzenkulturen, wie beispielsweise Mais, Weizen, Gerste, Soja, Baumwolle und Erdnüsse, verwendet werden kann, wobei eine Reihe wirtschaftlich wichtiger (Problem-)Unkräuter und Ungräser sicher bekämpft werden kann.

Gegenstand der vorliegenden Erfindung sind somit herbizide synergistische Mittel, gekennzeichnet durch einen wirksamen Gehalt an einer Wirkstoffkombination bestehend aus

(1) (5-Trifluormethyl-1,3,4-thiadiazol-2-yl-oxy)-essigsäure-N-isopropyl-N-(4-fluorphenyl)-amid der Formel (I)

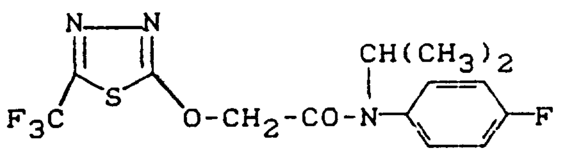

(I)

und

(2) 4-Amino-6-tert.-butyl-3-methylthio-1,2,4-triazin-5(4H)-on (METRIBUZIN),

wobei auf 1 Gewichtsteil Wirkstoff der Formel (I) 0,01 bis 100 Gewichtsteile METRIBUZIN entfallen.

Die Verbindung der Formel (I) ist bekannt, z.B. aus EP-A-348 737 und US-A-4 968 342.

Der Wirkstoff METRIBUZIN ist beschrieben in "The Pesticide Manual", British Crop Protection Council, 8th Edition (1987), Seiten 573-574.

Der Wirkstoff der Formel (I) wirkt bevorzugt gegen monokotyle Unkräuter (= Ungräser), wirkt aber auch zusätzlich gegen einige dikotyle Unkräuter.

Der Wirkstoff METRIBUZIN kann zur selektiven Bekämpfung eines breiten Spektrums von Unkräutern und Ungräsern in wirtschaftlich wichtigen Kulturen wie z.B. Getreide, Mais, Soja und Baumwolle eingesetzt werden. Jedoch ist seine Wirkung gegen bestimmte mono- und dikotyle Schadpflanzen nicht immer ausreichend. Wichtige Problemunkräuter wie beispielsweise Galium aparine oder Lolium-Arten werden häufig nur unzureichend erfaßt.

Es wurde nun überraschend gefunden, daß die oben definierte Wirkstoffkombination aus dem Wirkstoff der Formel (I) und METRIBUZIN eine besonders hohe Wirksamkeit aufweist und in vielen Kulturen selektiv anwendbar ist.

Überraschenderweise ist die herbizide Wirksamkeit der erfindungsgemäßen Wirkstoffkombination wesentlich höher als die Summe der Wirkungen der einzelnen Wirkstoffe.

Es liegt somit ein nicht vorhersehbarer echter synergistischer Effekt vor und nicht nur eine Wirkungsergänzung. Die neue Wirkstoffkombination ist in vielen Kulturen gut verträglich, wobei die neue Wirkstoffkombination auch sonst schwer bekämpfbare Unkräuter wie Galium aparine und Lolium-Arten gut bekämpft. Die neue Wirkstoffkombination stellt somit eine wertvolle Bereicherung der Selektivherbizide dar.

Die erfindungsgemäße Wirkstoffkombination kann z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera,

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombination ist jedoch keineswegs auf diese Gattungen beschränkt, sondern erstreckt sich in gleicher Weise auch auf andere Pflanzen.

Der synergistische Effekt der erfindungsgemäßen Wirkstoffkombination ist bei bestimmten Konzentrationsverhältnissen besonders stark ausgeprägt. Jedoch können die Gewichtsverhältnisse der Wirkstoffe in der Wirkstoffkombination in relativ großen Bereichen variiert werden. Im allgemeinen entfallen auf 1 Gewichtsteil Wirkstoff der Formel (I) 0,01 bis 100 Gewichtsteile, vorzugsweise 0,1 bis 30 Gewichtsteile METRIBUZIN.

Die Wirkstoffe beziehungsweise die Wirkstoffkombination können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90 %.

Die erfindungsgemäße Wirkstoffkombination wird im allgemeinen in Form von Fertigformulierungen zur Anwendung gebracht. Die beiden in der Wirkstoffkombination enthaltenen Wirkstoffe können aber auch in Einzelformulierungen bei der Anwendung gemischt, d.h. in Form von Tankmischungen zur Anwendung gebracht werden.

Die neue Wirkstoffkombination kann als solche oder in ihren Formulierungen weiterhin auch in Mischung mit anderen bekannten Herbiziden Verwendung finden, wobei wiederum Fertigformulierungen oder Tankmischungen möglich

sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflaufverfahren, kann es ferner vorteilhaft sein, in die Formulierungen als weitere Zusatzstoffe pflanzenverträgliche mineralische oder vegetabilische Öle (z.B. das Handelspräparat "Oleo Dupont 11E") oder Ammoniumsalze wie z.B. Ammoniumsulfat oder Ammoniumrhodanid aufzunehmen.

Die neue Wirkstoffkombination kann als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombination können in einem gewissen Bereich variiert werden; sie hängen u.a. vom Wetter und von den Bodenfaktoren ab. Im allgemeinen liegen die Aufwandmengen zwischen 0,01 und 10 kg pro ha, vorzugsweise zwischen 0,05 und 5 kg pro ha, besonders bevorzugt zwischen 0,1 und 3,0 kg pro ha.

Die erfindungsgemäße Wirkstoffkombination kann vor und nach dem Auflaufen der Pflanzen appliziert werden, also im Vorauflauf-und Nachauflauf-Verfahren.

Die gute herbizide Wirkung der neuen Wirkstoffkombination geht aus den nachfolgenden Beispielen hervor. Während die einzelnen Wirkstoffe in der herbiziden Wirkung Schwächen aufweisen, zeigt die Kombination durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.; "Calculating synergistic and antagonistic responses of herbicide combinations", Weeds 15, Seiten 20 - 22, 1967):

Wenn

X = % Schädigung durch Herbizid A (Wirkstoff der Gruppe 1) bei p kg/ha Aufwandmenge und

Y = % Schädigung durch Herbizid B (Wirkstoff der Gruppe 2) bei q kg/ha Aufwandmenge und

E = die erwartete Schädigung der Herbizide A und B, bei p und q kg/ha Aufwandmenge,

dann ist $E = X + Y - (X * Y/100)$ .

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Wirkstoffkombination bei den Unkräutern größer ist als die berechnete, d.h., daß die neue Wirkstoffkombination synergistisch wirkt.

Anwendungsbeispiele

Zur Herstellung der für die Versuche benötigten Wirkstoffzubereitungen werden entsprechende Mengen einer wasserdispergierbaren Pulverformulierung (WP) des Heteroaryloxyacetamids der Formel (I) und eine handelsübliche Formulierung des METRIBUZINS abgewogen und mit Wasser auf die gewünschte Konzentration verdünnt; durch Mischen wurden unterschiedliche Kombinationen der beiden Wirkstoffe hergestellt.

Als METRIBUZIN-Formulierung wurde ein 70%iges WP eingesetzt (Handelsname: ®SENCOR, Fa. Bayer AG).

Die Teste wurden wie folgt durchgeführt:

Nachauflauf-Teste/Gewächshaus

Mit den Wirkstoffzubereitungen spritzt man Testpflanzen, welche eine Höhe von 5 bis 15 cm haben, so, daß die jeweils gewünschten Wirkstoffmengen pro Flächeneinheit ausgebracht werden. Die Konzentration der Spritzbrühen wird so gewählt, daß in 500 l Wasser pro ha die jeweils gewünschten Wirkstoffmengen ausgebracht werden. Nach der Behandlung werden die Testpflanzen im Gewächshaus unter kontrollierten Bedingungen (Temperatur, Luftfeuchte, Licht) bis zur Auswertung gehalten. Nach drei Wochen wird der Schädigungsgrad der Pflanzen in % Schädigung im Vergleich zur Entwicklung unbehandelter Kontrollpflanzen bonitiert.

Es bedeuten:

0 = keine Wirkung/Schädigung (wie unbehandelte Kontrolle)

100 = totale Vernichtung

Wirkstoffe, Aufwandmengen und Resultate gehen jeweils aus den nachfolgenden Tabellen hervor, wobei die in den Tabellen verwendeten Abkürzungen folgenden Bedeutungen haben:

(I) = (5-Trifluormethyl-1,3,4-thiadiazol-2-yl-oxy)-essigsäure-N-isopropyl-N-(4-fluorphenyl)-amid;
(MBZ) = METRIBUZIN;
gef. = gefundene Schädigung beziehungsweise Wirkung (in Prozent);
ber. = nach der obigen COLBY-Formel berechnete Schädigung beziehungsweise Wirkung (in Prozent).

Tabelle A-1

| Nachauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Wirkung in % | | | |
| | | Weizen | | Avena | |
| | | gef. | ber. | gef. | ber. |
| (I) | 125 | 0 | | 50 | |
| -bekannt- | | | | | |
| (MBZ) | 30 | 0 | | 20 | |
| -bekannt- | | | | | |
| (I) +(MBZ) | 125+30 | 10 | 0 | 90 | 60 |
| -erfindungsgemäß- | | | | | |

Tabelle A-2

| Nachauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Wirkung in % | | | |
| | | Mais | | Abutilon | |
| | | gef. | ber. | gef. | ber. |
| (I) | 250 | 0 | | 0 | |
| -bekannt- | 500 | 0 | | 10 | |
| (MBZ) | 30 | 0 | | 30 | |
| -bekannt- | | | | | |
| (I) +(MBZ) | 250+ 30 | 0 | 0 | 100 | 30 |
| -erfindungsgemäß- | 500+ 30 | 0 | 0 | 100 | 37 |

Tabelle A-3

| Nachauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Wirkung in % | | | |
| | | Mais | | Chenopodium | |
| | | gef. | ber. | gef. | ber. |
| (I) | 250 | 0 | | 30 | |
| -bekannt- | 500 | 0 | | 30 | |
| (MBZ) | 30 | 0 | | 30 | |
| -bekannt- | | | | | |
| (I) +(MBZ) | 250+ 30 | 0 | 0 | 100 | 51 |
| -erfindungsgemäß- | 500+ 30 | 0 | 0 | 100 | 51 |

Tabelle A-4

| Nachauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Wirkung in % | | | |
| | | Mais | | Solanum | |
| | | gef. | ber. | gef. | ber. |
| (I) | 250 | 0 | | 10 | |
| -bekannt- | 500 | 0 | | 20 | |
| (MBZ) | 60 | 0 | | 60 | |
| -bekannt- | | | | | |
| (I) +(MBZ) | 250+ 60 | 10 | 0 | 100 | 64 |
| -erfindungsgemäß- | 500+ 60 | 10 | 0 | 100 | 68 |

Tabelle A-5

| Nachauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Wirkung in % | | | |
| | | Mais | | Setaria | |
| | | gef. | ber. | gef. | ber. |
| (I) | 250 | 0 | | 60 | |
| -bekannt- | | | | | |

Tabelle A-5 (fortgesetzt)

| Nachauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Wirkung in % | | | |
| | | Mais | | Setaria | |
| | | gef. | ber. | gef. | ber. |
| (MBZ) | 60 | 0 | | 40 | |
| -bekannt- | | | | | |
| (I) +(MBZ) | 250+ 60 | 0 | 0 | 100 | 76 |
| -erfindungsgemäß- | | | | | |

Tabelle A-6

| Nachauflauf-Test/Gewächshaus | | | | | |
|---|---|---|---|---|---|
| Wirkstoff bzw. -kombination | Aufwandmenge g/ha (Wirkstoff) | Testpflanzen | | | |
| | | Schädigung bzw. Wirkung in % | | | |
| | | Mais | | Digitaria | |
| | | gef. | ber. | gef. | ber. |
| (I) | 125 | 10 | | 80 | |
| -bekannt- | 250 | 10 | | 80 | |
| (MBZ) | 30 | 10 | | 20 | |
| -bekannt- | | | | | |
| (I) +(MBZ) | 125+ 30 | 0 | 19 | 100 | 84 |
| -erfindungsgemäß- | 250+ 30 | 10 | 19 | 100 | 84 |

## Patentansprüche

**1.** Herbizide synergistische Mittel, gekennzeichnet durch einen wirksamen Gehalt an einer Wirkstoffkombination bestehend aus

(1) (5-Trifluormethyl-1,3,4-thiadiazol-2-yl-oxy)-essigsäure-N-isopropyl-N-(4-fluorphenyl)-amid der Formel (I)

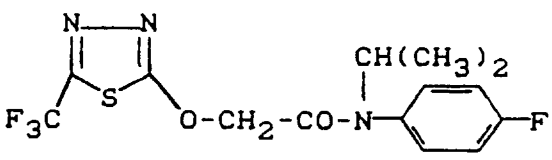

(I)

und

(2) 4-Amino-6-tert.-butyl-3-methylthio-1,2,4-triazin-5(4H)-on (METRIBUZIN),

wobei auf 1 Gewichtsteil Wirkstoff der Formel (I) 0,01 bis 100 Gewichtsteile METRIBUZIN entfallen.

2. Herbizide synergistische Mittel gemäß Anspruch 1, dadurch gekennzeichnet, daß in der Wirkstoffkombination das Gewichtsverhältnis von Wirkstoff der Formel (I) zu METRIBUZIN zwischen 1:0,1 und 1:30 liegt.

3. Verfahren zur Bekämpfung von Unkraut, dadurch gekennzeichnet, daß man eine Wirkstoffkombination gemäß Anspruch 1 oder 2 auf Unkraut oder seinen Lebensraum einwirken läßt.

4. Verwendung einer Wirkstoffkombination gemäß Anspruch 1 oder 2 zur Bekämpfung von Unkraut.

5. Verfahren zur Herstellung von herbiziden synergistischen Mitteln, dadurch gekennzeichnet, daß man eine Wirkstoffkombination gemäß Anspruch 1 oder 2 mit Streckmitteln und/oder oberflächenaktiven Mitteln vermischt.

## Claims

1. Herbicidal synergistic agents, characterised by an effective content of an active ingredient combination consisting of

(1) N-isopropyl-N-(4-fluorophenyl)-(5-trifluoromethyl-1,3,4-thiadiazol-2-yl-oxy)-acetamide of the formula (I)

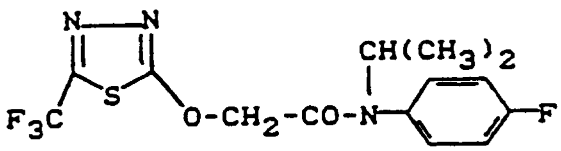

(I)

and

(2) 4-amino-6-tert.-butyl-3-methylthio-1,2,4-triazin-5(4H)-one (METRIBUZINE),

0.01 to 100 parts by weight of METRIBUZINE being used per 1 part by weight of active ingredient of the formula (I).

2. Herbicidal synergistic agents according to Claim 1, characterised in that, in the active ingredient combination, the weight ratio of active ingredient of the formula (I) to METRIBUZINE is between 1 : 0.1 and 1 : 30.

3. Method for combating weeds, characterised in that an active ingredient combination according to Claim 1 or 2 is allowed to act on weeds or their habitat.

4. Use of an active ingredient combination according to Claim 1 or 2 for combating weeds.

5. Process for the preparation of herbicidal synergistic agents, characterised in that an active ingredient combination according to Claim 1 or 2 is mixed with extenders and/or surface-active agents.

## Revendications

1. Compositions herbicides synergiques, caractérisées par une teneur efficace en une association de substances actives constituée de

(1) N-isopropyl-N-(4-fluorophényl)-amide d'acide(5-trifluorométhyl-1,3,4-thiadiazole-2-yloxy)-acétique de formule (I)

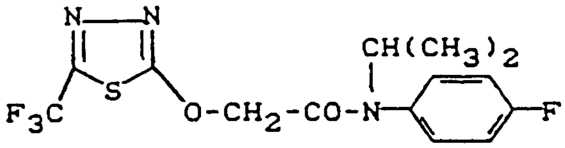

(I)

et

(2) 4-amino-6-tertio-butyl-3-méthylthio-1,2,4-triazine-5(4H)-one (METRIBUZINE),

dans la proportion de 0,01 à 100 parties en poids de METRIBUZINE pour 1 partie en poids de substance active de formule (I).

2. Compositions herbicides synergiques suivant la revendication 1, caractérisées en ce que dans l'association de substances actives, le rapport en poids de la substance active de formule (I) à la METRIBUZINE se situe entre 1:0,1 et 1:30.

3. Procédé pour combattre une mauvaise herbe, caractérisé en ce qu'on fait agir une association de substances actives suivant la revendication 1 ou 2 sur la mauvaise herbe ou sur son milieu.

4. Utilisation d'une association de substances actives suivant la revendication 1 ou 2 pour combattre une mauvaise herbe.

5. Procédé de préparation de compositions herbicides synergiques, caractérisé en ce qu'on mélange une association de substances actives suivant la revendication 1 ou 2 avec des diluants et/ou des agents tensio-actifs.